# EUROPEAN PATENT APPLICATION

(11) **EP 3 809 355 A1**
(43) Date of publication of application: **21.04.2021**
(21) Application number: 20201884.2
(22) Date of filing: 14.10.2020
(51) Int. Cl.: G06Q 30/02

(54) **AUDIO-BASED USER MATCHING**

(30) Priority: 14.10.2019 GB 201914862
(71) Applicant: Global Radio Services Limited, London, Greater London WC2H 7LA (GB)
(72) Inventor: MARSHALL, Eleanor, London, Greater London WC2H 7LA (GB); WHITESIDE, Liam, London, Greater London WC2H 7LA (GB)
(74) Representative: Slingsby Partners LLP

(57) **Abstract**

A method for establishing one or more personal characterisations of a user of an audio content stream, the method comprising: storing a plurality of predetermined relationships between one or more receiving conditions of transmissions and one or more personal characterisations of a user; transmitting a first transmission comprising the audio content stream to a receiving device; receiving, from the receiving device, one or more receiving conditions of the first transmission; and comparing the one or more receiving conditions received from the receiving device with the plurality of predetermined relationships to establish one or more personal characterisations of the user of the first receiving device.

## Description

### Background of the invention

This invention relates to a method for establishing one or more personal characterisations of a user of an audio content stream.

Targeted advertising is a commonly used form of advertising that provides retailers with an opportunity to identify consumers that may be interested in their products and to track the purchases of those consumers in response to their advertisements. In online targeted advertising, when a user accesses the webpage of a retailer, a data tag known as a cookie is generated on the user's device and is sent to the server of the retailer. The cookie comprises details such as information about the user, the webpages that the user has searched and their location. The retailer can use this information to build a profile of the user, and to target advertisements to the user that are determined to complement this profile. By implementing this technique, the retailer increases the chance of the users that receive their advertisements being motivated by the advertisements to purchase their products.

The targeted advertising methods described above cannot generally be used for profiling users that are exposed to audio advertisements whilst listening to audio content. Firstly, as the streaming of audio often does not require the use of a webpage, cookie-based identification cannot be used reliably. Secondly, users streaming audio content often do not have to provide login details to access this content, and so user identification is further hindered. There is therefore currently an inability to identify many of the users listening to an audio stream, and so an inability to provide targeted audio advertisements to such users. There is also an inability to track the users' response to an advertisement that they are exposed to over an audio stream.

There is a need for a method of providing targeted advertising to listeners of an audio content stream.

### Summary of the invention

According to a first aspect of the present invention there is provided a method for establishing one or more personal characterisations of a user of an audio content stream, the method comprising: storing a plurality of predetermined relationships between one or more receiving conditions of transmissions and one or more personal characterisations of a user; transmitting a first transmission comprising the audio content stream to a receiving device; receiving, from the receiving device, one or more receiving conditions of the first transmission; and comparing the one or more receiving conditions received from the receiving device with the plurality of predetermined relationships to establish one or more personal characterisations of the user of the first receiving device.

According to a second aspect of the present invention there is provided a method for establishing a mutual identity of a user of an audio content stream on a plurality of receiving devices, the method comprising: transmitting a first transmission comprising the audio content stream to a first receiving device; receiving, from the first receiving device, a first set of information comprising one or more receiving conditions of the first transmission; transmitting a second transmission comprising the audio content stream to a second receiving device; receiving, from the second receiving device, a second set of information comprising one or more receiving conditions of the second transmission; comparing the receiving conditions from the first set of information and the second set of information; determining that the identity of the user of the first receiving device is the same as an identity of a user of the second receiving device if the comparison of the receiving conditions from the first set of information and the receiving conditions of the second set of information fulfils one or more predetermined match conditions.

One of the one or more of the receiving conditions may be a temporal indicator.

The temporal indicator may be the time at which the first transmission is transmitted.

The temporal indicator may be a number of times the audio content of the first transmission is accessed.

The temporal indicator may be a duration for which the first transmission is transmitted to the first receiving device.

The identification that the identity of the user of the first receiving device is the same as the identity of the user of a second receiving device may comprise determining, from the first set of information, that the streaming of the audio content is terminated on the first receiving device at a first time and determining, from the second set of information, that the streaming is initiated on the second receiving device at a second specified time, the first and the second specified times differing from each other less than a predetermined threshold.

The one or more personal characterisations of the user may include one or more of age, gender, profession, social classification and interests.

One of the one or more receiving conditions may be a geographical indicator.

The geographical indicator may indicate the IP address from which the first device is receiving the first transmission.

One of the one or more receiving conditions may be a content indicator.

The content indicator may be selected from a group comprising a name of a radio station, a type of content, a song or an artist.

One of the one or more receiving conditions may be an indication of the identity of the device.

The indication of the identity of the device may indicate that the first device is relaying the first transmission to the user using a Bluetooth connection.

The indication of the identity of the device may indicate that the user is accessing the audio stream using a pair of headphones.

The comparison between the first set of information and the prestored relationship may be conducted by measuring the vectoral displacement of the data of the first set of information from the data of the prestored relationship.

The vectoral displacement may be established by determining the cosine of the angle between a first non-zero vector representing a predetermined relationship for a personal characterisation of a user and a second non-zero vector representing two receiving conditions received from the receiving device.

The method may further comprise selecting an interstitial item for insertion into the audio content stream from a plurality of interstitial items in dependence on the one or more personal characterisations that have been identified for the user.

The interstitial items to be selected may be advertisements.

### Detailed description

The present invention will now be described by way of example with reference to the accompanying drawings.

In the drawings:
Figure 1 shows an arrangement for providing audio content to users;
Figure 2 shows a method for establishing one or more personal characterisations of a user;
Figure 3 shows a method for establishing a mutual identity of a user of an audio content stream on a plurality of receiving devices;
Figure 4 shows some exemplary comparisons between stored predetermined relationships and receiving conditions from a transmission that may be used to establish one or more personal characterisations of a user of a receiving device.

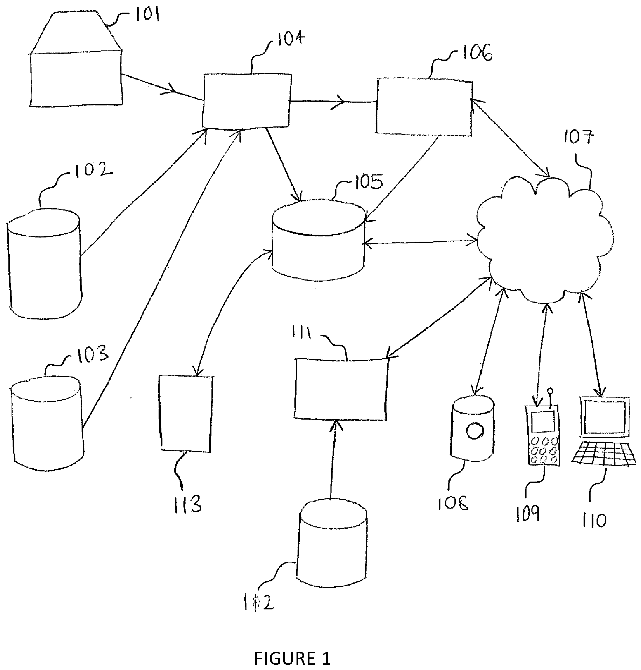

Figure 1 shows a media playout system for providing audio content to users on a variety of receiving devices. Audio content is provided by a media source, which provides the main content of media to be provided. The main content could be generated live in an entertainment studio 101 or from the location of a live event such as a sports stadium. Alternatively, the main content could be pre-recorded and stored in a first media store 102. The media playout system further comprises a second store 103 which stores interstitial items of playout content. In one example of the invention, the interstitial items may be advertisements. In alternative examples, other types of content that are played out during breaks in the main content stream may be used, such as public service announcements, short documentaries or artistic content. The interstitial item comprises a media element and has metadata associated with it which indicates the identity of the item and/or an attribute of the item that is to be used for identification purposes.

The media playout system comprises a management suite 104 that has access to both the primary programming provided from either the live entertainment source 101 or the first media store 102 and the interstitial items stored in the second store 103. The management suite 104 collates the primary programming and the interstitial items to generate a content stream that can be streamed to one or more users. The management suite 104 may intersperse one or more advertisements retrieved from the advertisement store into the main content in order to create the content stream to be played out. The content stream may be played out from its start at a time when it is requested by a user (in other words, it may be played out on demand), or it may be played out with a predetermined start time that is independent of when it is requested by a consumer.

Different content streams may be provided to different consumers for the same main content. For some users, interstitial items may not be provided between their primary content. Other users may receive content streams that comprise different interstitial items for their main content. The management suite 104 stores in a database 105 an indication of which interstitial items have been played to which consumers.

The content streams to be played out are passed through the management suite 104 to a media server 106. The media server 106 encodes each content stream into a suitable digital format and transmits it over the internet 107 to any devices that have requested it. Examples of devices that may receive the content stream are smart speakers 108, mobile devices 109 and fixed computing devices 110. Different devices can be used to receive the media streams depending on the preference of an individual user. In some examples, the same user may own multiple receiving devices, and may use these multiple receiving devices to listen to the content stream. When any of the devices 108, 109, 110 receive the media feed, a processor of the device decodes the media feed into audio data and a user interface and the device plays out that audio data. For some devices, the user interface could include a loudspeaker and/or a display.

When a content stream is provided to a receiving device 108, 109, 110, its metadata may be transmitted to the device together with the media content. In addition to indicating the identity of the item and/or an attribute of the item, the metadata may also indicate one or more receiving conditions of the content stream by the receiving device. A receiving condition may be defined as any criterion that indicates a condition in which the transmission was received. Examples of receiving conditions include the time of day at which the transmission was received, or the radio station that it was received from.

In addition to storing an indication of which interstitial items have been played to consumers, the database 105 comprises information indicating a plurality of predetermined relationships between a number of receiving conditions of a content stream and one or more personal characterisations of a user. A personalised characterisation may be defined as a demographic characteristic of a user, or a classifiable characteristic of a given population such as age, gender or social classification. Media server 106 is configured to store one or more receiving conditions of the content stream when a stream of media content is transmitted to one or more of the receiving devices 108, 109, 110, and to compare one or more of these receiving conditions to the plurality of predetermined relationships in order to identify one or more personal characterisations of the user of the receiving device.

The media playout system further comprises an additional server 111 that can be accessed by any of the devices 108, 109, 110 over the internet 107. The other server could be a web server. It could operate a commerce site such as an online shop or store, by means of which products or services can be acquired or consumed. The server 111 has access to a data store 112 which holds the content to be provided to the server 111. That may, for example, be information defining a set of webpages to be served by the server 111, how to take payment for products or services, and how to initiate the supply of products or services once payment has been made.

When any of the receiving devices 108, 109, 110 accesses the server 111, the server 111 instructs the receiving device to report information to server 113 including the identity of the user of the receiving device and what content it was accessing from server 111. The receiving device transmits to server 113 one or more messages indicating the content that it was accessing from the server. The content may be identified in that/those messages by its address (e.g. URL) or any other identity such as its title or a unique reference by which the content is designated on server 111. Server 113 adds this to the history in database 105.

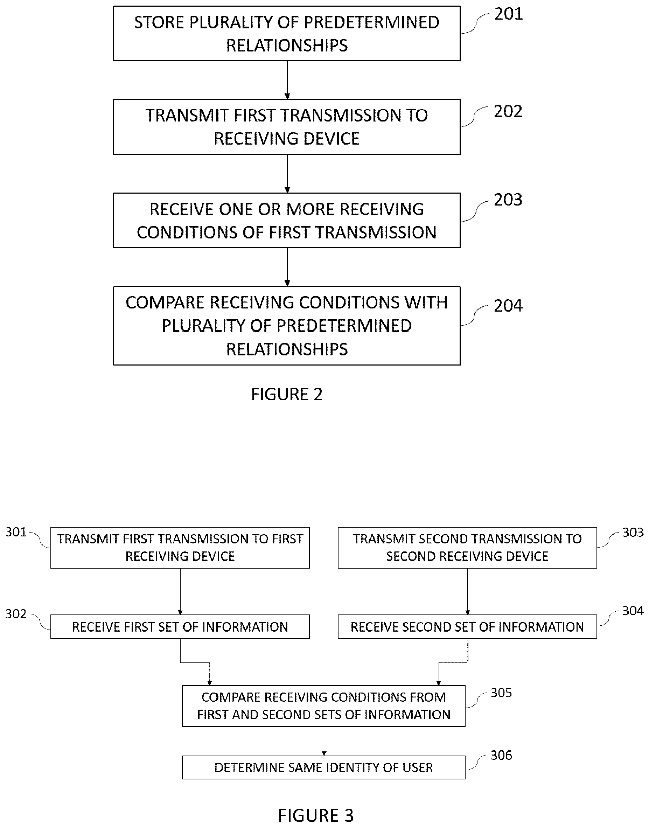

Figure 2 depicts a first exemplary method of the claimed invention. This method comprises the identification of one or more personal characterisations of a user of an audio content stream.

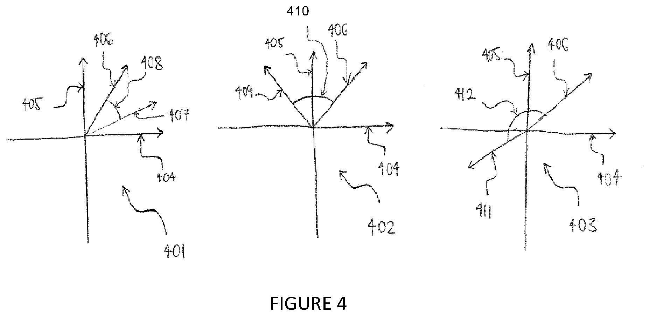

The method starts at step 201, where a plurality of predetermined relationships between one or more receiving conditions of transmissions and one or more personal characterisation of a user is stored in the database 105. The predetermined relationships may be created using a predefined algorithm and may be defined using user survey data or alternative analytical research. All of the predetermined relationships to be stored in the database 105 are stored in advance of the proceeding method steps. The predetermined relationships will be described in further detail below, with reference to Figure 4.

At step 202 the content stream is transmitted, from the media server 106, to one or more of the receiving devices 108, 109, 110. The content stream comprises the main content that is recorded from either the live entertainment source 101 or the first media store 102 and one or more interstitial items that are obtained from the second media store 103. The content stream may be transmitted to the user in real-time, or alternatively may be transmitted on-demand. In one example, when the content stream is transmitted to a receiving device, the media server creates and stores a set of metadata indicating the receiving conditions of the transmission. This metadata may be stored in the database 105 that is connected to the server, and in some examples is transmitted with the content stream to the receiving device. In an alternative example, the metadata may be created by the receiving device when it receives the content stream. In this example, when a receiving device receives the content stream, that device transmits the metadata to the media server 106 which stores the data in the database 105.

At step 203, the metadata is received at the media server, either because it has been created at the media server 106 or transmitted from one or more receiving devices 108, 109, 110. Once the media server 106 receives the metadata it proceeds to compare the one or more receiving conditions comprised within the metadata with the plurality of predetermined relationships received stored in the database 105. This step is illustrated at step 204 of Figure 2. The media server 106 may access the database 105 to obtain the predetermined relationships and/or the receiving conditions.

The receiving conditions of the transmission of a content stream can be used to establish a personal characterisation of a user of a receiving device or may indicate a number of characteristics associated with the transmission. In one example, a receiving condition may be a temporal indicator, such as the time (e.g. time of day or day of the week) at which the content stream is transmitted to the receiving device. This may indicate the time at which the user is exposed to the content stream. Alternatively, the temporal indicator may be the frequency or number of times that the user is listening to content. The temporal indicator may also be the duration for which the transmission is transmitted to the first receiving device. In a second example, a receiving condition may be a content indicator that indicates the type of content that is being transmitted to the receiving device. Examples of content indicators that may be identified are the radio station, the type of content or the song/artist that is being played in the transmitted stream. In a further example, a receiving condition may be a device indicator, such as the OS or ISP preference of the user, information about the browser or platform that is being used, or the type of device that is being used. For example, the device may be an Apple (RTM) or an Amazon (RTM) device. The device indicator may alternatively indicate whether the receiving device is relaying the content stream to a user using a Bluetooth connection, or whether the user is accessing the audio stream using a pair of headphones. A receiving condition may additionally be a geographical indicator, such as the latitudinal and longitudinal position of the user or the Internet Protocol (IP) address that is being used. In some examples, metadata that is received by the media server 106 may comprise any one of these receiving conditions in isolation. In preferred examples the metadata may comprise any combination of these conditions. The receiving conditions identified above are merely examples of such conditions. Any alternative indicators as to the status of a transmitted content stream may be used.

Figure 3 depicts a second exemplary method of the claimed invention. This method comprises identifying a common user over a plurality of receiving devices.

The method shown in Figure 3 is initiated at step 301, in which the media server 106 transmits a first transmission of a content stream to a first receiving device. The first transmission is initiated when a user of the first receiving device issues a command to the receiving device to initiate the receiving of a transmission. The first receiving device may be any of the types of receiving device referenced in Figure 1 or may be any alternative type of receiving device that is capable of receiving an audio stream over a suitable data link to the media server. At step 302 the media server 106 receives a first set of information, or metadata, comprising one or more receiving conditions of the first transmission. As is described above, the metadata may either be created at the media server 106 on transmission of the content stream or may be transmitted from one or more receiving devices 108, 109, 110 when it receives the content stream. The receiving conditions may comprise any of the indicators described above.

At step 303 the media server 106 transmits a second transmission to a second device. As with the first transmission, the second transmission is initiated after a user of the second receiving device issues a command on the receiving device to initiate the receiving of a transmission. The second receiving device may be any of the types of device referenced in Figure 1 or may be any alternative type of receiving device that is capable of receiving an audio stream. At step 304 the media server 106 receives a second set of information, or metadata, comprising one or more receiving conditions of the second transmission. The metadata may either be created at the media server 106 on transmission of the content stream or may be transmitted from one or more receiving devices 108, 109, 110 when it receives the content stream. The receiving conditions may comprise any of the indicators described above.

It should be noted that method steps 301 and 303 may occur simultaneously, or alternatively either of these steps could occur in advance of the other. The same is true of method steps 302 and 304. The method may also be expanded to apply to the use of more than two receiving devices by a user.

In certain scenarios, a listener of a content stream may initiate the transmission of a content stream on a first receiving device, and then may pause the transmission on the first device and subsequently initiate transmission on a second device. An example of when this might happen is if a user were to start their streaming activity at home on a first computing device such as the device depicted by reference 110 of Figure 1, and then to pause their transmission in order to leave their home. The listener may subsequently continue their streaming activity on a commute using a second, mobile device such as that illustrated in 109 of Figure 1. It will be appreciated by the skilled person that multiple alternative combinations of devices and scenarios may be used to form comparable examples.

For scenarios such as the above, for the purposes of targeting advertisements to a user, it will be important to establish that the user that initiates the transmission of the content stream on a first device is in fact the same user that initiates the transmission of the content stream on a second device. To achieve this, at step 305 of Figure 3 the media server compares the receiving conditions of the first transmission of the content stream to the first receiving device with the receiving conditions of the second transmission of the content stream to the second receiving device.

At step 306 the media server is able, through comparison of the receiving conditions of the first transmission and the second transmission of the audio content stream, to determine whether the receiving conditions from the first set of information and the receiving conditions from the second set of information fulfil one or more predetermined match conditions. As with the predetermined relationships defined with respect to Figure 2, the predetermined match conditions may be stored in the database 105 and may be accessed by the media server 106 when it is necessary to determine whether the predetermined match conditions have been fulfilled. If the receiving conditions of the first transmission and the receiving conditions of the second transmission correspond to a predetermined similarity, the media server 106 can determine that the identity of the user of the first receiving device is the same as the identity of a user of the second receiving device.

In one example, the receiving conditions that are compared are the time at which the first transmission starts and the time at which the second transmission starts. More importantly, if the same content stream is played out in a first transmission and then paused at a certain point, and then that same content stream is resumed in a second transmission from the same point at which the first transmission has been paused, then these two transmissions can be identified as being initiated from the same user. This specific match condition can be fulfilled by determining the time at which the streaming of the audio content is terminated on a first receiving device and the time at which the streaming is initiated on the second receiving device, as well as the place in the audio content at which the first and second transmissions are paused and resumed respectively. If the first and second specified times differ from each other by less than a predetermined threshold, then the method can determine that the user of the first device has the same identity as the user of the second device.

As such, the predetermined similarity that is used to determine the common identity of a user may use parameters that correspond to the receiving conditions described above. For example, the predetermined similarity may concern a temporal characteristic of the receiving conditions, such as the time at which the first transmission has started and the time at which the second transmission has started. Preferably, the predetermined similarity may concern the time at which the first transmission has ended and the time at which the second transmission has started. The predetermined similarity may comprise a geographical, device related or content indicators, or any alternative indicator.

Whilst Figure 3 illustrates an exemplary method in which a common user is identified on two distinct receiving devices, it will be appreciated that this method may be utilised for any number of receiving devices.

The method described in Figure 3 may also be used to determine whether a plurality of different listeners of a content stream are residing under a common IP address. In this scenario, the set of information that is obtained from the metadata of the first and second transmissions comprises a geographical indicator, and more specifically the IP address to which the first and second transmissions are transmitted. To determine the presence of a plurality of different users under a common IP address, steps 301 and 303 of Figure 3 can be applied to a large number of receiving devices. If, on execution of step 305, it is determined that the number of devices sharing a common geographical indicator exceeds a predetermined threshold value, it is determined that these devices must belong to different listeners. As a result of this comparison, one or more listeners sharing the common geographical indicator may be identified as separate users and shall be characterised as such using the method described in Figure 2. Alternatively, the multiple users may be omitted from the characterisation method in Figure 2 so as to avoid confusion of the system.

Figure 4 illustrates a plurality of exemplary comparisons 401, 402, 403 between stored predetermined relationships and receiving conditions from a transmission that may be used to establish one or more personal characterisations of a user of a receiving device. In Figure 4, these comparisons are arranged as vectoral representations. More specifically, the comparisons are arranged using a cosine similarity measure. The cosine similarity measure provides a measure of similarity between two non-zero vectors of an inner product space by measuring the cosine of the angle between them. The cosine of the angle demonstrates a vectoral displacement between the predetermined relationship and the receiving characteristics of a transmission. The cosine similarity measure is depicted on a two-dimensional graph comprising an x-axis 404 and a y-axis 405. Each axis of the graphs depicted in Figure 4 may be defined by a different receiving condition of a transmission. The possible values of each receiving condition may be arranged along the relevant axes of the graph. For example, the x-axis 404 of graphs 401, 402, 403 may represent the time of day at which a transmission occurs, and the y-axis may represent the radio station that is being played out during the transmission. In this example, the time of day may be arranged along the x-axis in a chronological order. The radio station may be arranged along the y-axis as a number of discrete options. Each axis 404, 405 could alternatively be represented by any of the exemplary receiving conditions mentioned above, or by any alternative receiving condition.

A common vector 406 is displayed on each of the displayed graphs 401, 402, 403. This vector represents a predetermined relationship for a personal characterisation of a user. The personal characterisation may be any demographic characteristic of the user, such as the age of the user or their general life stage, their profession, their interests, their gender or their social classification. In an exemplary implementation of this graph, the vector may represent that the gender of a user is female.

The graphs displayed in Figure 4 illustrate different types of vector pairings obtained using the cosine similarity method. Each vector pairing indicates a different similarity measure between the receiving conditions of a transmission and the predetermined relationship. The first graph 401 displays an example of similar vectors, in which the cosine angle 408 located between the vector illustrating the receiving conditions of the transmission 407 and the predetermined relationship 406 is close to 0 degrees. In this embodiment, due to the small vectoral displacement between the two vectors, the receiving conditions are determined to correspond closely to the predetermined relationship and so the user of the receiving device is determined to comprise the characterisation of the predetermined relationship. In the example where the predetermined relationship vector 406 represents that the gender of a user is female, the similarity between vector 406 and vector 407 indicates a strong likelihood that the listener is a female.

The second graph 402 of Figure 4 displays an example of orthogonal vectors, in which the angle 410 located between the vector illustrating the receiving conditions of the transmission 409 and the predetermined relationship 406 is close to 90 degrees. In this scenario, it is determined that the two vectors are unrelated, and so no similarity is determined.

In the third graph identified by reference numeral 403 of Figure 4, an example of opposite vectors is provided. In this representation, the angle 412 located between the vector illustrating the receiving conditions of the transmission 411 and the predetermined relationship 406 is at or near to 180 degrees. In this case, the vectors can be determined to oppose each other.

It will be appreciated by the skilled person that a combination of the cosine measures displayed in Figure 4 may be accumulated for a user using a plurality of different receiving conditions of a transmission received by the user. These measures may be combined to build a more thorough metric of the characteristics of a user. In this example, a vectoral score is established for each comparison and these scores are summed to produce an overall personal characterisation score for a user. A similar vector will add a positive weighting to the overall score, an orthogonal vector will add no weighting to the overall score and an opposite vector will add a negative weighting to the overall score.

Although the exemplary comparisons provided in Figure 4 each compare only one vector 407, 409, 411 to vector 406, it may be appreciated that a comparison between any number of vectors illustrating the receiving conditions of transmissions may be contemporaneously made to a vector representing a predetermined relationship. For example, a plurality of vectors illustrating the receiving conditions of transmissions received by a user may be complied over time and may be provided on the same graph for comparison to the vector of the predetermined relationship. An approximate nearest neighbour approach may be used to analyse the vectors on that graph to determine those that are closest in value to the vector of the predetermined relationship. The analysis of multiple receiving conditions contemporaneously results in an increase in the processing speed associated with the audio-based user matching method.

Although the comparisons between stored predetermined relationships and receiving conditions for a transmission are illustrated in Figure 4 as being performed using vectoral representations, it will be appreciated that these comparisons may alternatively be performed by observing the displacement between data points on a graph.

On completing the method illustrated in Figure 1, one or more personal characterisations of a user may be determined by the media server. These characterisations may be transferred to the management suite 104, which is able to select a suitable selection of interstitial items from the second media store 103 for insertion into the content stream to be provided to that user. As mentioned above, the second media store 103 stores metadata alongside each interstitial item, the metadata indicating the identity of the item and/or an attribute of the item that is to be used for identification purposes. This metadata may include an indication of the characteristics of a listener that should receive the item. The metadata of the interstitial items can therefore be compared to the personal characterisations received from a receiving device to ensure that items that correspond to the characteristics of a user associated with the device can be provided to the receiving device by the media server 106. The method described herein therefore enables the transmission of targeted advertising to a user based on personalised characterisations of a user that are defined through the receiving conditions of an audio stream.

In addition to the metadata that is sent to the receiving device, the metadata indicating the content of the media stream can also be provided to a retailer whose advertisement has been provided to the user of the receiving device. If the user uses the receiving device on which they are listening to the content stream to access the webpage of the retailer, or uses an alternative device that has been associated with the user using the method described in Figure 3, the retailer can compare the metadata with the tag that data been stored in their store, such as data store 112. This advantageously allows the retailer to identify the users that have and have not been successfully targeted by their advertisements, and therefore can provide them with an indication of how to modify their advertisement campaigns in order to optimise this targeting.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A method for establishing one or more personal characterisations of a user of an audio content stream, the method comprising:
storing a plurality of predetermined relationships between one or more receiving conditions of transmissions and one or more personal characterisations of a user;
transmitting a first transmission comprising the audio content stream to a receiving device;
receiving, from the receiving device, one or more receiving conditions of the first transmission; and
comparing the one or more receiving conditions received from the receiving device with the plurality of predetermined relationships to establish one or more personal characterisations of the user of the first receiving device.

2. A method for establishing a mutual identity of a user of an audio content stream on a plurality of receiving devices, the method comprising:
transmitting a first transmission comprising the audio content stream to a first receiving device;
receiving, from the first receiving device, a first set of information comprising one or more receiving conditions of the first transmission;
transmitting a second transmission comprising the audio content stream to a second receiving device;
receiving, from the second receiving device, a second set of information comprising one or more receiving conditions of the second transmission;
comparing the receiving conditions from the first set of information and the second set of information;
determining that the identity of the user of the first receiving device is the same as an identity of a user of the second receiving device if the comparison of the receiving conditions from the first set of information and the receiving conditions of the second set of information fulfils one or more predetermined match conditions.

3. A method as claimed in any preceding claim, wherein one of the one or more receiving conditions is a temporal indicator.

4. A method as claimed in claim 3, wherein the temporal indicator indicates the time at which the first transmission is transmitted.

5. A method as claimed in claim 3, wherein the temporal indicator indicates a number of times the audio content of the first transmission is accessed or a duration for which the first transmission is transmitted to the first receiving device.

6. A method is claimed in claim 4, wherein the identification that the identity of the user of the first receiving device is the same as the identity of the user of a second receiving device comprises determining, from the first set of information, that the transmission of the audio content is terminated on the first receiving device at a first time and determining, from the second set of information, that the transmission is initiated on the second receiving device at a second specified time, the first and the second specified times differing from each other less than a predetermined threshold.

7. A method as claimed in any preceding claim, wherein the one or more personal characterisations of the user includes one or more of age, gender, profession, social classification and interests.

8. A method as claimed in any preceding claim, wherein one of the one or more receiving conditions is a geographical indicator indicating the IP address from which the first device is receiving the first transmission.

9. A method as claimed in any preceding claim, wherein one of the one or more receiving conditions is a content indicator selected from a group comprising a name of a radio station, a type of content, a song or an artist.

10. A method as claimed in any preceding claim, wherein one of the one or more receiving conditions is an indication of the identity of the device.

11. A method as claimed in claim 10, wherein the indication of the identity of the device indicates that the first device is relaying the first transmission to the user using a Bluetooth connection, or that the user is accessing the audio stream using a pair of headphones.

12. A method as claimed in any preceding claim, wherein the comparison between the first set of information and the prestored relationship is conducted by measuring the vectoral displacement of the data of the first set of information from the data of the prestored relationship.

13. A method as claimed in claim 12, wherein the vectoral displacement is established by determining the cosine of the angle between a first non-zero vector representing a predetermined relationship for a personal characterisation of a user and a second non-zero vector representing two receiving conditions received from the receiving device.

14. A method as claimed in any preceding claim, wherein the method further comprises selecting an interstitial item for insertion into the audio content stream from a plurality of interstitial items in dependence on the one or more personal characterisations that have been identified for the user.

15. A method as claimed in claim 14, wherein the interstitial items to be selected are advertisements.
